# FASCICULE DE BREVET EUROPEEN

(11) **EP 1 591 687 B1**
(45) Date de publication et mention de la délivrance du brevet: **03.09.2008**
(21) Numéro de dépôt: 05007174.5
(22) Date de dépôt: 01.04.2005
(51) Int. Cl.: F16D 65/097, F16D 55/00, F16D 65/00

(54) **Plaque d'absorption de vibrations pour freins a disque et frein a disque comportant une telle plaque**
Schwingungsdämpfender Scheibenbremsbelag und mit einem solchen Belag ausgestattete Scheibenbremse.
Vibration damping disc brake pad and disc brake using this kind of pad.

(30) Priorité: 29.04.2004 FR 0404613
(43) Date de publication de la demande: 02.11.2005
(73) Titulaire: ROBERT BOSCH GMBH, 70442 Stuttgart (DE)
(72) Inventeur: Wagner, Richard, 94230 Cachan (FR); Nocera, Pascal, 78400 Chatou (FR); Barillot, Alain, 60310 Lagny (FR)
(74) Mandataire: Hurwic, Aleksander Wiktor

(56) Documents cités:
- EP-A- 0 282 129
- US-A- 5 427 213
- US-A- 5 975 252

## Description

L'invention concerne un frein à disque de véhicule et notamment une plaque (appelée SHIM en langue anglaise) prévue dans les freins à disques entre le support de garniture de frein et l'organe de commande pour amortir les vibrations qui peuvent se produire lors d'un freinage et qui engendrent des ondes acoustiques perceptibles souvent sous forme d'un crissement.

Dans un véhicule équipé de freins à disques, chaque roue qui doit être freinée par un tel système de freinage comporte un dispositif de freinage solidaire du châssis du véhicule et qui vient par friction freiner le mouvement de rotation d'un disque de freinage solidaire de la roue. Le dispositif de freinage comporte de chaque côté du disque de freinage une garniture de frein portée par un support de garniture. Chaque support de garniture est mobile perpendiculairement au plan du disque et est maintenu à deux de ses extrémités dans des logements d'une chape. Des organes de commande permettent d'exercer une pression sur les supports de garnitures perpendiculairement au plan des garnitures de freins. Une plaque intermédiaire (appelée SHIM en langue anglaise), fixée au support de garniture de frein, est prévue entre le support de garniture de frein et les organes de commande. Le rôle de ces garnitures est, comme cela est connu, d'amortir la retransmission, vers les organes de commande et l'ensemble du véhicule, des vibrations dues au frottement des garnitures de frein sur le disque de freinage

Les deux garnitures de freins disposées de part et d'autre d'un disque permettent donc, lors d'un freinage, d'enserrer le disque et de freiner sa rotation.

Lorsque les garnitures de freins entrent en contact avec le disque, il se produit un frottement, les garnitures de freins ont tendance à être entraînées par le disque dans le sens de rotation du disque d'autant plus qu'il est prévu une possibilité de léger déplacement des supports de garnitures de frein dans le sens de rotation du disque. L'organe de pression qui applique une force de freinage à un support de garniture de frein a tendance à être entraîné également dans ce sens de rotation par la garniture intermédiaire, mais en raison du fait que cet organe de pression est immobilisé, il contrarie alors le déplacement de la garniture intermédiaire. Lors de freinages faibles notamment, il peut arriver que la pression des garnitures de frein sur le disque ne soit pas suffisamment importante pour que le disque entraîne les garnitures de frein et leur support de façon que les supports aillent se plaquer contre leur logement dans la chape. Les supports de garnitures de freins ne sont donc pas calés contre la chape et elles peuvent légèrement "flotter" et engendrer un bruit de vibrations. L'invention a pour objet de résoudre cet inconvénient.

L'invention a principalement pour objet une plaque d'absorption des vibrations destinées à être disposée entre un support de garniture de frein et un organe de commande d'un frein à disque avec une face destinée à être en contact avec l'organe de commande du frein à disque et une face opposée en contact avec le support de garniture de frein, voir US-A-5 427 213. L'invention est caractérisée en ce qu'elle comporte au moins un dispositif de maintien lui permettant de se déplacer par rapport au support de garniture de frein selon une direction tangentielle à la direction de rotation d'un disque de frein destiné à être ralenti par le frein à disque, mais lui interdisant de se déplacer dans les autres directions.

De préférence, la plaque intermédiaire comporte des languettes situées sur les bords de la plaque et destinées à se recourber contre les flancs du support de garniture de frein.

De préférence, la plaque intermédiaire comporte au moins un trou pour recevoir un taquet fixé dans le support de garniture de frein émergeant de la face du support de garniture de frein en contact avec la plaque intermédiaire et traversant la plaque intermédiaire par ledit trou, celui-ci ayant une forme telle par rapport à la forme du taquet que la plaque intermédiaire peut se déplacer selon une direction tangentielle à la direction de rotation du disque mais ne peut pas se déplacer dans les autres directions.

Le trou a une forme allongée possédant une largeur équivalente ou légèrement supérieure au diamètre du taquet.

De préférence, la plaque intermédiaire possède une position médiane, le dispositif de maintien lui permettant de se déplacer de part et d'autre de cette position médiane et un dispositif de rappel commande le retour de la plaque intermédiaire dans cette position.médiane.

De préférence, le dispositif de rappel comporte au moins une languette ressort qui fait saillie sur la face de la plaque intermédiaire, ladite languette ressort étant destinée à être en contact avec le support de garniture de frein.

L'invention a principalement pour objet un frein à disque comportant:
- au moins un support de garniture de frein maintenu dans une chape et portant une garniture de frein comportant une surface plane destinée à être appliquée à une face plane latérale d'un disque de freinage, un organe de commande permettant d'appliquer au support de garniture de frein une force perpendiculaire au plan de la garniture de frein,
- une plaque intermédiaire d'absorption de vibrations prévue pour être disposée entre le support de garniture de frein et l'organe de commande avec une face destinée à être en contact avec l'organe de commande et une face opposée en contact avec le support de garniture de frein, caractérisé en ce que la plaque intermédiaire est une plaque selon l'une quelconque des revendications 1 à 6 et en ce que le support de garniture comporte des moyens coopérant avec le dispositif de maintien de ladite plaque d'absorption.

Ledit dispositif de maintien permet à la plaque intermédiaire de se déplacer selon une longueur supérieure à une longueur de déplacement possible du support de plaquette de frein par rapport à la chape.

L'invention a également pour objet un frein à disque selon la revendication 7 ou 8, caractérisé en ce que le support de garniture comportent des flancs munis d'encoches dans lesquelles des languettes d'une plaque intermédiaire et en ce que la largeur de ces encoches est supérieure à la largeur des languettes.

De préférence, un taquet fixé dans le support de garniture de frein émerge de la face du support de garniture de frein traversant une plaque intermédiaire et par le trou.

De préférence, le taquet est de forme cylindrique.

De préférence, le taquet est un rivet possédant une tête de dimension supérieure à la largeur du trou.

De préférence, la plaque intermédiaire possède une position médiane, le dispositif de maintien lui permettant de se déplacer de part et d'autre de cette position médiane, et en ce qu'un dispositif de ressort commande le retour de la plaque intermédiaire dans cette position médiane.

De préférence, la plaque support de garniture comporte au moins une encoche recevant une languette ressort qui fait saillie sur une face d'une plaque intermédiaire et qui s'appuie sur une extrémité de ladite encoche.

De préférence, le support de garniture de frein comporte deux encoches de manière à recevoir deux languettes de la plaque d'absorption, lesdites languettes étant disposées en tête- bêche et qui s'appuient chacune à une extrémité d'une encoche.

De préférence, ce dispositif de maintien permet à la plaque intermédiaire de se déplacer selon une longueur supérieure à une longueur de déplacement possible du support de garniture de frein par rapport à la chape.

Les différents aspects de l'invention apparaîtront plus clairement dans la description qui va suivre et dans les figures annexées qui représentent :
- les figures 1a à 1e, un exemple de réalisation du dispositif de l'invention,
- les figures 2a à 2c, un autre exemple de réalisation du dispositif de l'invention,
- les figures 3a à 3e, une variante de réalisation du dispositif de l'invention,
- la figure 4, une autre variante de réalisation du dispositif de l'invention.

En se reportant aux figures la à le, on va donc décrire un exemple de réalisation du dispositif de l'invention.

Comme cela est connu dans la technique et comme cela a été décrit précédemment, une plaque intermédiaire (appelée SHIM en langue anglaise) est prévue entre le support de garniture de frein et l'organe de pression qui a pour rôle de communiquer les efforts de freinage du circuit de freinage du véhicule aux garnitures de freins.

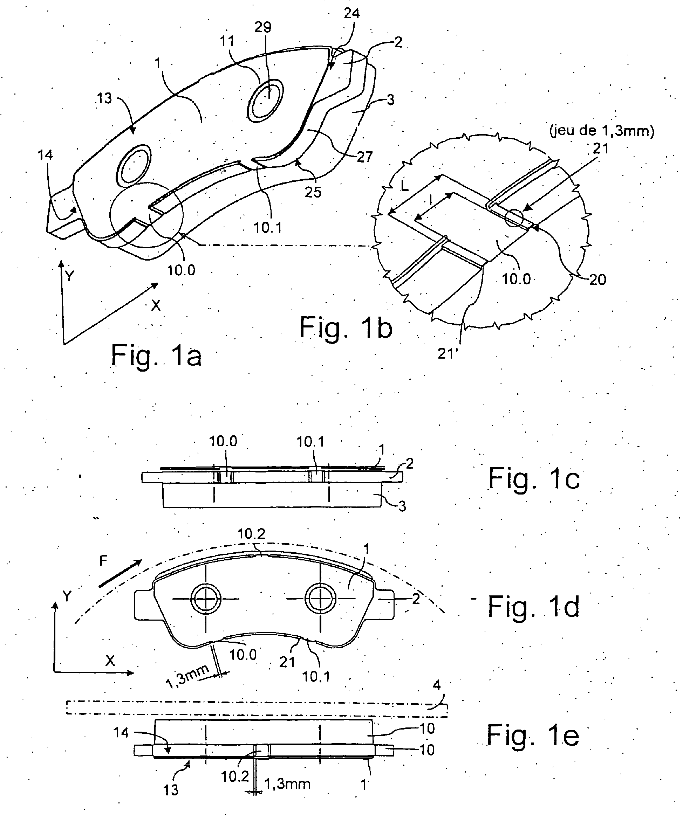

Sur la figure 1a, cette plaque intermédiaire 1 est accolée par sa face 14 à la face 24 du support de garniture de frein 2 (côté opposé à la garniture de frein 3), c'est-à-dire à la face qui reçoit les efforts de pression communiqués par le circuit de freinage du véhicule. Les bords de cette plaque intermédiaire possèdent des languettes de maintien .10.0, 10.1, 10.2 qui enserrent les flancs 27 du support de garniture de frein. Ces languettes sont conçues pour que la plaque intermédiaire soit solidaire du support de garniture de frein selon la direction Y mais puisse se déplacer par rapport à ce support selon la direction X correspondant à la direction de rotation F d'un disque de freinage représenté en trait mixte sur les figures 1d et 1e.

De plus, selon une forme de réalisation avantageuse de l'invention, les flancs 27 du support de garniture de frein comportent des encoches 20 dans lesquelles sont repliées les languettes 10.0 à 10.2. La largeur L de ces encoches est supérieure à la largeur 1 des languettes. La plaque intermédiaire 1 peut donc se déplacer par rapport au support de garniture de frein selon la direction de rotation du disque de freinage.

Lors d'un freinage, le support de garniture de frein est entraîné selon la direction de rotation du disque de freinage. La plaque intermédiaire 1 qui est en contact avec l'organe de commande de freinage (le piston par exemple) ne se déplace pas par rapport à l'organe de pression. Il y a donc un déplacement du support de garniture de frein par rapport à la plaque intermédiaire. On voit donc que même lors d'un freinage faible où la force de pression communiquée par le circuit de freinage est faible, le support de garniture de frein.pourra se déplacer librement selon le sens de rotation du disque de freinage et se caler contre la chape dans laquelle il est monté.

La figure 1b représente les jeux 21 et 21' qui peuvent être prévus entre les bords d'une languette et les bords d'une encoche dans laquelle elle est repliée. En réalité, comme cela est connu dans la technique, il existe un jeu de chaque côté du support de garniture de frein et la chape (ou les logements de la chape prévus pour recevoir les oreilles du support de garniture de frein). Il est donc prévu, comme cela est représenté sur la figure 1b, un jeu de chaque côté de la languette et les bords de l'encoche. Ce jeu est supérieur au déplacement possible d'un support de garniture de frein pour qu'il aille en butée contre la chape. A titre d'exemple, sur les figures la à le, ce jeu a été prévu de 1,3 millimètre de chaque côté de la languette.

Bien que cela ne soit pas représenté sur les figures, il est possible de prévoir que les languettes 10.0 à 10.2 soient recourbées sur la face du support de garniture de frein opposée à la face 24. La garniture 1 sera alors maintenue contre la face 24 selon la direction perpendiculaire à la face 24.

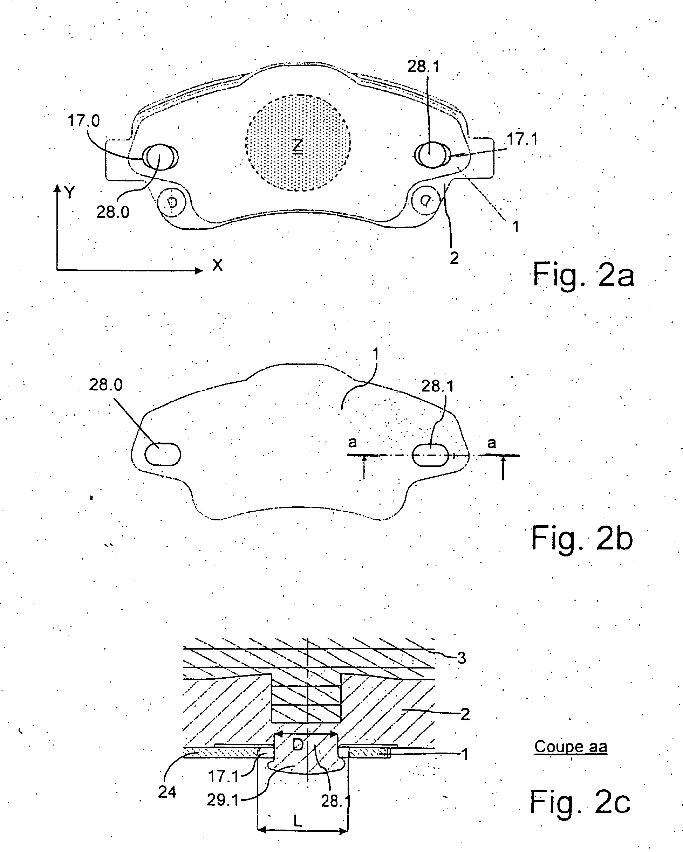

Les figures 2a à 2c représentent un autre mode de réalisation de l'invention qui diffère de l'exemple de réalisation précédent par le mode de liaison de la plaque intermédiaire avec le support de garniture de frein.

Deux taquets 28.0 et 28.1 émergent de la face 24 du support de garniture de frein et traversent par des trous 17.0 et 17.1 la plaque intermédiaire 1. Ces taquets peuvent faire partie du support de garniture de frein ou être des rivés fixés dans ce support. Chaque taquet peut être terminé par une tête 29.1 permettant de retenir la plaque 1 contre le support de garniture de frein (voir figure 2c en coupe aa). Les trous 17.0, 17.1 ont une forme allongée pour permettre à la plaque intermédiaire de se déplacer par rapport au support de garniture de frein. Si les taquets sont cylindriques de diamètre D (figure 2c), la longueur L du trou permettra un déplacement tel que décrit précédemment pour que, lors d'un freinage, le support de garniture de frein puisse se déplacer en butée contre la chape sans entraîner la plaque intermédiaire 1.

On notera que la zone d'appui des moyens de commande permettant d'obtenir un freinage est située par exemple au centre de la plaque intermédiaire représentée par la zone Z sur la figure 2a.

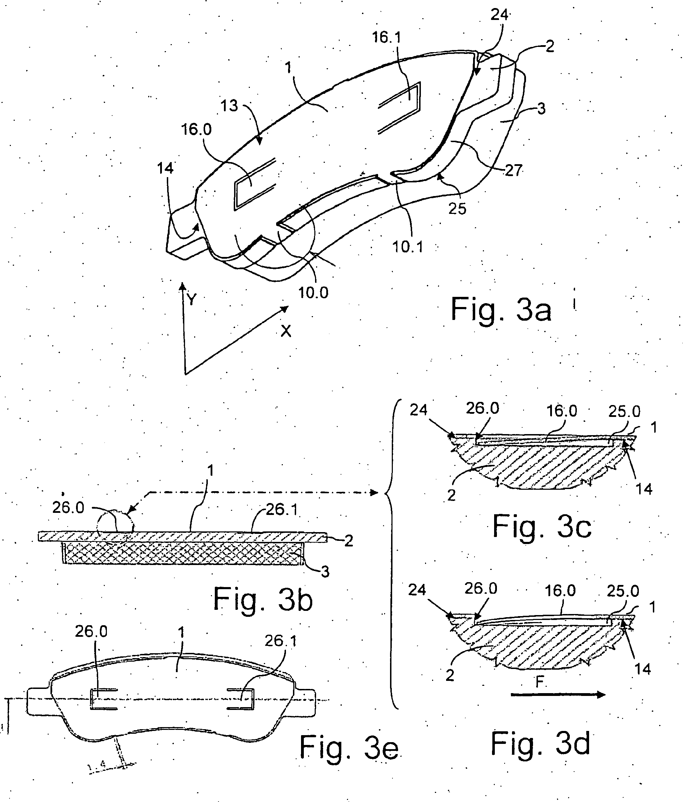

En se reportant aux figures 3a à 3e, on va maintenant décrire une variante de réalisation du dispositif de l'invention permettant à la plaque intermédiaire d'adopter une position de repos médiane par rapport au support de garniture de frein.

Lorsque le freinage cesse, la plaque intermédiaire 1 doit normalement reprendre sa position d'origine par rapport au support de garniture de frein 2 telle que la position représentée en figures 3b et 3c. Si elle ne reprend pas cette position d'origine, à un freinage suivant, la plaque intermédiaire va encore se décaler par rapport au support de garniture de frein et les moyens de fixation de la garniture intermédiaire sur le support de garniture de frein risquent d'empêcher le support de garniture de frein de se déplacer par rapport à la plaque intermédiaire. Notamment la languette 10.0 de la figure 1b sera en butée contre un bord de l'encoche 20. On risque alors de retrouver le problème que se propose de résoudre l'invention.

La plaque intermédiaire possède donc deux languettes ressorts 16.0 et 16.1 découpée par exemple dans la plaque intermédiaire 1 comme cela est représenté sur les figures 3a et 3e.

Les figures 3c et 3d représentent en détail une telle languette ressort. La languette ressort 16.0 fait saillie légèrement à la surface de la face 14 de la plaque 1. Par ailleurs la face 2a du support de garniture de frein comporte des encoches telle que l'encoche 25.0 en figure 3c. Lorsque la plaque 1 est montée sur le support de garniture de frein, la languette 16.0 est située dans l'encoche 25.0 et son extrémité est en butée ou quasiment en butée contre une extrémité 26.0 de l'encoche. Ainsi, lors d'un freinage, le support de garniture de frein se déplace dans le sens de la flèche F (figure 3d) et, comme décrit précédemment la plaque 1 n'a pas tendance à se déplacer. Le support de garniture de frein, en se déplaçant par rapport à la plaque 1, déforme la languette 16.0. Par exemple, elle prend la forme représentée en figure 3d. Lorsque le freinage cesse, le support de garniture de frein n'est plus entraîné par le disque de freinage. La languette ressort 16.0 repousse le support de garniture de frein dans sa position d'origine par rapport à la plaque (figure 3c).

Sur la figure 3e on voit qu'une plaque 1 possède deux languettes ressort 16.0 et 16.1 disposées en tête bêche. En effet, de même que sur les figures 1b et 3b, il a été prévu des jeux de part et d'autre d'une languette pour prévoir les freinages en marche avant et en marche arrière du véhicule, de même il convient de prévoir le retour en position médiane du support de garniture de frein par rapport à la plaque 1 que ce soit après un freinage en marche avant, qu'après un freinage en marche arrière.

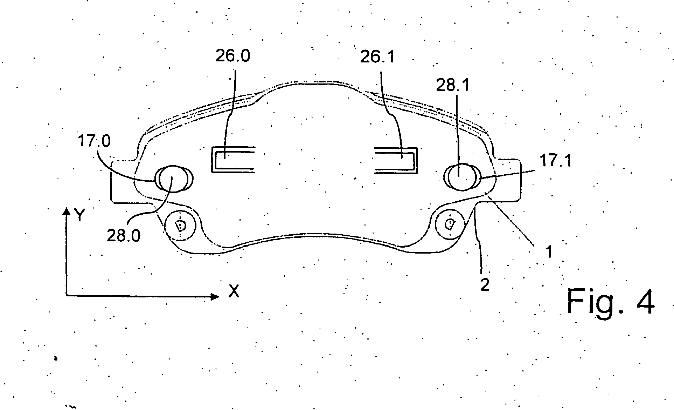

La figure 4 représente une application du système de languettes ressorts des figures 3a à 3e au dispositif des figures 2a à 2c.

## Revendications

1. Plaque d'absorption des vibrations destinée à être disposée entre un support de garniture de frein et un organe de commande d'un frein à disque avec une face (13) destinée à être en contact avec l'organe de commande du frein à disque et une face opposée (14) en contact avec le support de garniture de frein (2), **caractérisé en ce qu'**elle comporte au moins un dispositif de maintien lui permettant de se déplacer par rapport au support de garniture de frein (2) selon une direction tangentielle à la direction de rotation d'un disque de frein destiné à être ralenti par le frein à disque, mais lui interdisant de se déplacer dans les autres directions.

2. Plaque d'absorption selon la revendication 1, **caractérisé en ce que** la plaque intermediaire comporte des languettes (10.0, 10.1, 10.2) situées sur les bords de la plaque et se recourbant contre les flancs (27) du support de garniture de frein (2).

3. Plaque d'absorption selon la revendication 1 ou 2, **caractérisé en ce que** la plaque intermédiaire comporte au moins un trou pour recevoir un taquet fixé dans le support de garniture de frein émergeant de la face (24) du support de garniture de frein (2) en contact avec la plaque intermédiaire (1) et traversant la plaque intermédiaire par ledit trou, celui-ci ayant une forme telle par rapport à la forme du taquet que la plaque intermédiaire peut se déplacer selon une direction tangentielle à la direction de rotation du disque mais ne peut pas se déplacer dans les autres directions.

4. Plaque d'absorption selon la revendication 3 **caractérisé en ce que** le trou a une forme allongée possédant une largeur équivalente ou légèrement supérieure au diamètre du taquet.

5. Plaque d'absorption selon l'une quelconque des revendications précédentes **caractérisé en ce que** la plaque intermédiaire possède une position médiane, le dispositif de maintien lui permettant de se déplacer de part et d'autre de cette position médiane, et **en ce qu'**un dispositif de rappel commande le retour de la plaque intermédiaire dans cette position médiane.

6. Plaque d'absorption selon la revendication précédente **caractérisé en ce que** le dispositif de rappel comporte au moins une languette ressort (16.0, 16.1) qui fait saillie sur la face (14) de la plaque intermédiaire, ladite languette ressort étant destinée à être en contact avec le support de garniture de frein.

7. Frein à disque comportant:
- au moins un support de garniture de frein (2) maintenu dans une chape et portant une garniture de frein (3) comportant une surface plane destinée à être appliquée à une face plane latérale d'un disque de freinage (4), un organe de commande permettant d'appliquer au support de garniture de frein une force perpendiculaire au plan de la garniture de frein,
- une plaque intermédiaire d'absorption de vibrations (1) prévue pour être disposée entre le support de garniture de frein et l'organe de commande avec une face (13) destinée à être en contact avec l'organe de commande et une face opposée (14) en contact avec le support de garniture de frein (2), **caractérisé en ce que** la plaque intermédiaire (1) est une plaque selon l'une quelconque des revendications de 1 à 6 et **en ce que** le support de garniture comporte des moyens coopérant avec le dispositif de maintien de ladite plaque d'absorption.

8. Frein à disque selon la revendication précédente **caractérisé en ce que** ledit dispositif de maintien permet à la plaque intermédiaire de se déplacer selon une longueur supérieure à une longueur de déplacement possible du support de plaquette de frein par rapport à la chape.

9. Frein à disque selon la revendication 7 ou 8 **caractérisé en ce que** le support de garniture (2) comportent des flancs munis d'encoches dans lesquelles des languettes (10.0, 10.1, 10.2) d'une plaque intermédiaire selon la revendication et **en ce que** la largeur de ces encoches est supérieure à la largeur des languettes.

10. Frein à disque selon l'une quelconque des revendications 7 à 9 **caractérisé en ce qu'**un taquet fixé dans le support de garniture de frein émerge de la face (24) du support de garniture de frein (2) traversant une plaque intermédiaire selon la revendication 3 et par le trou.

11. Frein à disque selon la revendication précédente **caractérisé en ce** le taquet est de forme cylindrique.

12. Frein à disque selon la revendication 10 ou 11, **caractérisé en ce que** le taquet est un rivet possédant une tête (20.3) de dimension supérieure à la largeur du trou.

13. Frein à disque selon l'une des revendications 7 à 12, **caractérisé en ce que** la plaque intermédiaire possède une position médiane, le dispositif de maintien lui permettant de se déplacer de part et d'autre de cette position médiane, et **en ce qu'**un dispositif de ressort commande le retour de la plaque intermédiaire dans cette position médiane.

14. Frein à disque selon l'une quelconque des revendications de 7 à 13 **caractérisé en ce que** la plaque support de garniture comporte au moins une encoche (25.0, 25.1) recevant une languette ressort (16.0, 16.1) qui fait saillie sur une face (14) d'une plaque intermédiaire selon la revendication 5 et 'qui s'appuie sur une extrémité (26.0) de ladite encoche.

15. Frein à disque selon la revendication précédente, **caractérisé en ce que** le support de garniture de frein comporte deux encoches de manière à recevoir deux languettes de la plaque d'absorption, lesdites languettes étant disposées en tête-bêche et qui s'appuient chacune à une extrémité d'une encoche.

## Claims

1. Vibration-absorbing plate intended to be disposed between a brake lining support and a control member of a disk brake, having a face (13) intended to be in contact with the control member of the disk brake and an opposite face (14) in contact with the brake lining support (2), **characterized in that** it comprises at least one holding device which allows its displacement relative to the brake lining support (2) in a direction tangential to the direction of rotation of a brake disk intended to be slowed by the disk brake, but prevents its displacement in the other directions.

2. Absorbing plate according to Claim 1, **characterized in that** the intermediate plate comprises tabs (10.0, 10.1, 10.2) situated on the edges of the plate and being bent over against the flanks (27) of the brake lining support (2).

3. Absorbing plate according to Claim 1 or 2, **characterized in that** the intermediate plate comprises at least one hole for receiving a driver fixed in the brake lining support and protruding from the face (24) of the brake lining support (2) in contact with the intermediate plate (1) and passing through the intermediate plate through the said hole, the latter having a shape which is such relative to the shape of the driver that the intermediate plate can be displaced in a direction tangential to the direction of rotation of the disk, but cannot be displaced in the other directions.

4. Absorbing plate according to Claim 3, **characterized in that** the hole has an elongated shape having a width equivalent to or slightly greater than the diameter of the driver.

5. Absorbing plate according to any one of the preceding claims, **characterized in that** the intermediate plate has a middle position, the holding device allowing its displacement on either side of this middle position, and **in that** a return device controls the return of the intermediate plate into this middle position.

6. Absorbing plate according to the preceding claim, **characterized in that** the return device comprises at least one spring tab (16.0, 16.1) which projects over the face (14) of the intermediate plate, the said spring tab being intended to be in contact with the brake lining support.

7. Disk brake comprising:
- at least one brake lining support (2) held in a yoke and bearing a brake lining (3) comprising a plane surface intended to be applied to a plane side face of a braking disk (4), a control member allowing a force perpendicular to the plane of the brake lining to be applied to the brake lining support,
- an intermediate vibration-absorbing plate (1) designed to be disposed between the brake lining support and the control member and having a face (13) intended to be in contact with the control member and an opposite face (14) in contact with the brake lining support (2), **characterized in that** the intermediate plate is a plate (1) according to any one of Claims 1 to 6 and **in that** the lining support comprises means cooperating with the holding device of the said absorbing plate.

8. Disk brake according to the preceding claim, **characterized in that** the said holding device allows displacement of the intermediate plate along a length greater than a length of possible displacement of the brake pad support relative to the yoke.

9. Disk brake according to Claim 7 or 8, **characterized in that** the lining support (2) comprises flanks provided with notches in which tabs (10.0, 10.1, 10.2) of an intermediate plate according claim and **in that** the width of these notches is greater than the width of the tabs.

10. Disk brake according to any one of Claims 7 to 9, **characterized in that** a driver fixed in the brake lining support protrudes from the face (24) of the brake lining support (2) passing through an intermediate plate according to Claim 3 and through the hole.

11. Disk brake according to the preceding claim, **characterized in that** the driver is cylindrical in shape.

12. Disk brake according to Claim 10 or 11, **characterized in that** the driver is a rivet having a head (20.3) greater in size than the width of the hole.

13. Disk brake according to any one of Claims 7 to 12, **characterized in that** the intermediate plate has a middle position, the holding device allowing its displacement on either side of this middle position, and **in that** a spring device controls the return of the intermediate plate into this middle position.

14. Disk brake according to any one of Claims 7 to 13, **characterized in that** the lining support plate comprises at least one notch (25.0, 25.1) receiving a spring tab (16.0, 16.1) which projects over one face (14) of an intermediate plate according to Claim 5 and which is supported on one end (26.0) of the said notch.

15. Disk brake according to the preceding claim, **characterized in that** the brake lining support comprises two notches such as to receive two tabs of the absorbing plate, the said tabs being arranged head to tail and each being supported at one end of a notch.

## Patentansprüche

1. Vibrationsabsorbierende Platte, die dazu bestimmt ist, zwischen einem Bremsklotzträger und einem Organ zum Steuern einer Scheibenbremse angeordnet zu sein, mit einer Fläche (13), die dazu bestimmt ist, mit dem Organ zum Steuern der Scheibenbremse in Kontakt zu stehen, und mit einer Fläche (14), die mit dem Bremsklotzträger (2) in Kontakt steht, , **dadurch gekennzeichnet, dass** sie mindestens eine Haltevorrichtung aufweist, die ihr ermöglicht, sich bezüglich des Bremsklotzträgers (2) entlang einer Richtung zu verschieben, die zu der Drehrichtung einer Bremsscheibe tangential ist, welche dazu bestimmt ist, von der Scheibenbremse verlangsamt zu werden, aber die sie daran hindert, sich in die anderen Richtungen zu verschieben.

2. Vibrationsabsorbierende Platte nach Anspruch 1, **dadurch gekennzeichnet, dass** die Zwischenplatte Zungen (10.0, 10.1, 10.2) aufweist, die an den Rändern der Platte angeordnet sind und sich gegen die Flanken (27) des Bremsklotzträgers (2) umbiegen.

3. Vibrationsabsorbierende Platte nach Anspruch 1 oder 2, **dadurch gekennzeichnet, dass** die Zwischenplatte mindestens ein Loch zum Aufnehmen einer Nase aufweist, die im Bremsklotzträger befestigt ist und aus der Fläche (24) des Bremsklotzträgers (2) austritt, die mit der Zwischenplatte (1) in Kontakt steht und die Zwischenplatte durch das Loch durchquert, wobei dieses Loch eine solche Form bezüglich der Form der Nase aufweist, dass sich die Zwischenplatte entlang einer Richtung, die zur Drehrichtung der Scheibe tangential ist, aber nicht in die anderen Richtungen verschieben kann.

4. Vibrationsabsorbierende Platte nach Anspruch 3, **dadurch gekennzeichnet, dass** das Loch eine längliche Form aufweist, die eine Breite besitzt, die so groß wie oder geringfügig größer als der Durchmesser der Nase ist.

5. Vibrationsabsorbierende Platte nach einem der vorhergehenden Ansprüche, **dadurch gekennzeichnet, dass** die Zwischenplatte eine mittlere Stellung besitzt, wobei die Haltevorrichtung ihr ermöglicht, sich auf der einen und anderen Seite dieser mittleren Stellung zu verschieben, und dass eine Rückstellvorrichtung die Rückstellung der Zwischenplatte in diese mittlere Stellung ermöglicht.

6. Vibrationsabsorbierende Platte nach einem der vorhergehenden Ansprüche, **dadurch gekennzeichnet, dass** die Rückstellungsvorrichtung mindestens eine Federzunge (16.0, 16.1) aufweist, die über die Fläche (14) der Zwischenplatte hervorsteht, wobei die Federzunge dazu bestimmt ist, mit dem Bremsklotzträger in Kontakt zu stehen.

7. Scheibenbremse mit
- mindestens einem Bremsklotzträger (2), der in einer Abdeckung gehalten ist und einen Bremsklotz (3) trägt, der eine ebene Fläche aufweist, die dazu bestimmt ist, gegen eine ebene Seitenfläche einer Bremsscheibe (4) in Anlage zu kommen, wobei ein Steuerorgan es ermöglicht, auf den Bremsklotzträger eine Kraft anzulegen, die senkrecht zur Ebene des Bremsklotzes ist,
- einer vibrationsabsorbierenden Zwischenplatte (1), die dazu vorgesehen ist, zwischen dem Bremsklotzträger und dem Steuerorgan angeordnet zu sein, mit einer Fläche (13), die dazu bestimmt ist, mit dem Steuerorgan in Kontakt zu stehen, und einer entgegengesetzten Fläche (14), die mit dem Bremsklotzträger (2) in Kontakt steht,
**dadurch gekennzeichnet, dass** die Zwischenplatte (1) eine Platte nach einem der Ansprüche 1 bis 6 ist, und dass der Bremsklotzträger Mittel aufweist, die mit der Vorrichtung zum Halten der Absorptionsplatte zusammenwirken.

8. Scheibenbremse nach dem vorhergehenden Anspruch, **dadurch gekennzeichnet, dass** die Haltevorrichtung der Zwischenplatte ermöglicht, sich auf einer Länge zu verschieben, die größer als eine mögliche Länge zur Verschiebung des Bremsklotzträgers bezüglich der Abdeckung ist.

9. Scheibenbremse nach Anspruch 7 oder 8, **dadurch gekennzeichnet, dass** der Bremsklotzträger (2) Flanken aufweist, die mit Einschnitten versehen sind, in welchen die Zungen (10.0, 10.1, 10.2) einer Zwischenplatte nach dem Anspruch 5 aufgenommen sind, und dass die Breite dieser Einschnitte größer als die Breite der Zungen ist.

10. Scheibenbremse nach einem der Ansprüche 7 bis 9, **dadurch gekennzeichnet, dass** eine im Bremsklotzträger befestige Nase aus der Fläche (24) des Bremsklotzträgers (2) austritt und durch eine Zwischenplatte nach Anspruch 3 und durch das Loch hindurchgeht.

11. Scheibenbremse nach dem vorhergehenden Anspruch, **dadurch gekennzeichnet, dass** die Nase zylinderförmig ist.

12. Scheibenbremse nach Anspruch 10 oder 11, **dadurch gekennzeichnet, dass** die Nase ein Niet ist, der einen Kopf (20.3) besitzt, dessen Abmessung größer als die Breite des Lochs ist.

13. Scheibenbremse nach einem der Ansprüche 7 bis 12, **dadurch gekennzeichnet, dass** die Zwischenplatte eine mittlere Stellung besitzt, wobei die Haltevorrichtung ihr ermöglicht, sich auf der einen und anderen Seite dieser mittleren Stellung zu verschieben, und dass eine Federvorrichtung die Rückstellung der Zwischenplatte in diese mittlere Stellung steuert.

14. Scheibenbremse nach einem der Ansprüche 7 bis 13, **dadurch gekennzeichnet, dass** die Bremsklotzträgerplatte mindestens einen Einschnitt (25.0, 25.1) aufweist, der eine Federzunge (16.0, 16.1) aufnimmt, die auf einer Fläche (14) einer Zwischenplatte nach Anspruch 5 hervorsteht und sich an einem Ende (26.0) des Einschnitts abstützt.

15. Scheibenbremse nach dem vorhergehenden Anspruch, **dadurch gekennzeichnet, dass** der Bremsklotzträger zwei Einschnitte aufweist, so dass zwei Zungen der Absorptionsplatte aufgenommen werden, wobei die Zungen entgegengesetzt angeordnet sind und sich jeweils an einem Ende des Einschnitts abstützen.
